# EUROPEAN PATENT APPLICATION

(11) **EP 2 687 967 A1**
(43) Date of publication of application: **22.01.2014**
(21) Application number: 12305878.6
(22) Date of filing: 19.07.2012
(51) Int. Cl.: G06F 3/0484

(54) **Editing information with slider edit tools**

(71) Applicant: Hewlett-Packard Development Company, L.P., Houston, TX 77070 (US)
(72) Inventor: Picard, Jean-Charles, 06901 Sophia-Antipolis (FR)
(74) Representative: Delumeau, François Guy

(57) **Abstract**

Editing information with a slider edit tool includes receiving a first input to edit information in an application window and displaying a slider edit tool in the application window in response to the first input where the slider edit tool has at least one editable section of the information and a first slider between a first range end point and a second range end point of a range of one of the at least one editable section.

## Description

### BACKGROUND

Computer programs and online applications often include data entry mechanisms. The data may be entered directly into information fields of documents or databases. A common date entry mechanism includes a pop-up calendar that allows a user to select a date. In response to selecting the date, the pop-up calendar disappears, and the date field is filled in with the selected date and time.

### BRIEF DESCRIPTION OF THE DRAWINGS

The accompanying drawings illustrate various examples of the principles described herein and are a part of the specification. The illustrated examples are merely examples and do not limit the scope of the claims.

Fig. 1 is a diagram of an illustrative system for editing information, according to principles described herein.

Fig. 2 is a diagram of an illustrative display, according to principles described herein.

Fig. 3 is a diagram of an illustrative slider edit tool, according to principles described herein.

Fig. 4 is a diagram of an illustrative slider edit tool, according to principles described herein.

Fig. 5 is a diagram of an illustrative slider edit tool, according to principles described herein.

Fig. 6 is a diagram of an illustrative slider edit tool, according to principles described herein.

Fig. 7 is a diagram of illustrative information, according to principles described herein.

Fig. 8 is a diagram of an illustrative slider edit tool, according to principles described herein.

Fig. 9 is a diagram of an illustrative slider edit tool, according to principles described herein.

Fig. 10 is a diagram of an illustrative slider edit tool, according to principles described herein.

Fig. 11 is a diagram of an illustrative method for editing information, according to principles described herein.

Fig. 12 is a diagram of an illustrative processor, according to principles described herein.

Fig. 13 is a diagram of an illustrative flowchart of a process for editing information, according to principles described herein.

Fig. 14 is a diagram of an illustrative slider edit tool, according to principles described herein.

Fig. 15 is a diagram of an illustrative slider edit tool, according to principles described herein.

### DETAILED DESCRIPTION

Some programs and applications involve a lot of data entry. Opening a new window each time that a user desires to fill in a field may be time consuming depending on the number of the fields to edit. A method for editing information with slider edit tools may include receiving a first input to edit information in an application window and displaying a slider edit tool in the application window in response to the first input where the slider edit tool has at least one editable section of the information and a first slider between a first range end point and a second range end point of a range of one of the at least one editable section.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described is included in at least that one example, but not necessarily in other examples.

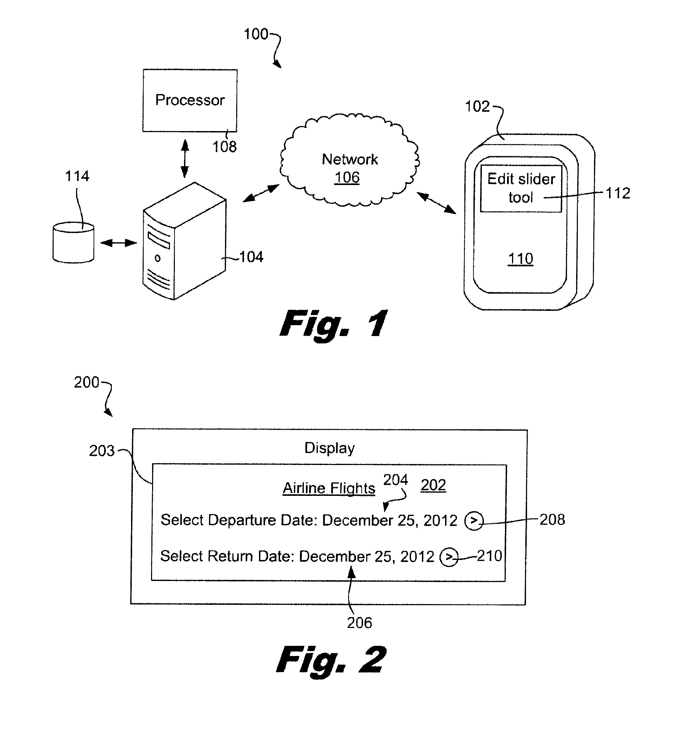

Fig. 1 is a diagram of an illustrative system for editing information (100), according to principles described herein. In this example, a client device (102), such as a mobile device, is in communication with a server (104) over a network (106). The server (104) may be in communication with a processor (108) that runs a program or application through the server (104). The program or application may be implemented on the client device (102). The application or program may include at least one data entry mechanism that is displayed on a display (110) of the client device and operated by the processor (108). The data entry mechanism may include a slider edit tool (112) displayed in the display. The edit slider tool (112) may include a slider that is positioned between a first range end point and a second range end point of a range. A user of the client device may enter data into the program or application by opening the data entry mechanism. Further, the user may move the slider edit tool between the first and second range end points until the slider edit tool arrives at the value that the user intends to enter into the data field.

The processor (108) may have access to a computer readable storage medium (114) that contains computer readable program code to edit time information in response to received inputs. The computer readable storage medium (114) may be a tangible, non-transitory storage medium. In some examples, the computer readable program code causes the edit slider tool (112) to be displayed in the display.

The client device (102) may be any device that is capable of using the program. The client device (102) may be a computer, a desktop computer, a laptop, an electronic tablet, a phone, a hand held mobile device, another client device, or combinations thereof. Further, the network (106) may be any network capable of exchanging information between the server (104) and the client device (102). The network (106) may be a local area network, a wide area network, a virtual private network, a telecommunications network, a wireless network, another type of network, or combinations thereof.

In some examples, the program or application is installed on the client device itself. In such an example, a processor internal to the client device may run the data entry mechanism. In other examples, the program or application is run by a website.

Fig. 2 is a diagram of an illustrative display (200), according to principles described herein. In this example, a program (202), such as a flight scheduling program, is displayed in a window (203) of the display (200). When initially opened in the display (200), the program (202) may display an initial departure date (204) and an initial return date (206). The user may edit the initial departure date (204) by selecting a first edit icon (208). Further, the user may edit the initial return date (206) by selecting a second edit icon (210).

The edit icons (208, 210) may be selected in any manner allowed by the display. For example, the icon may be selected through a mouse input, a touch input, a scroll input, a key input, a voice recognition input, another type of input, or combinations thereof.

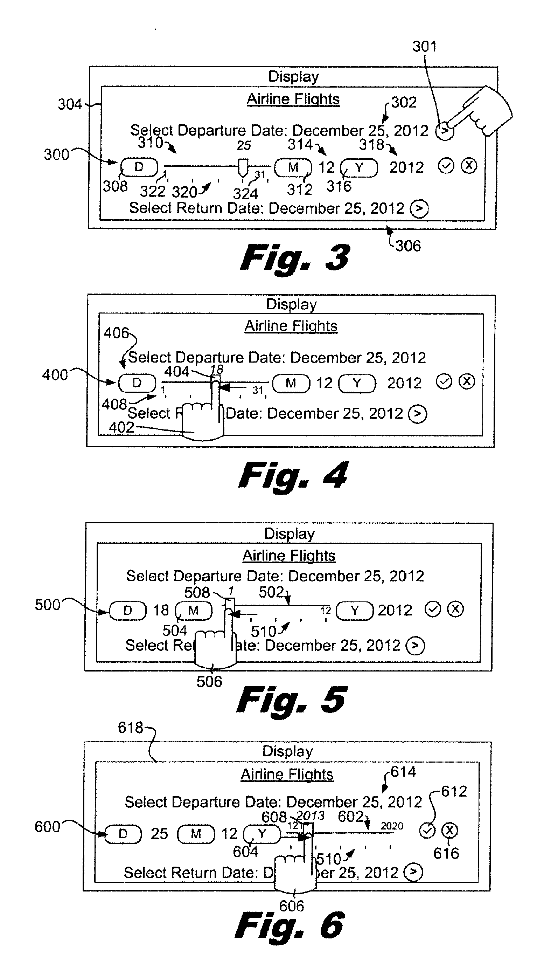

Fig. 3 is a diagram of an illustrative slider edit tool (300), according to principles described herein. In this example, the slider edit tool (300) appears below the initial departure date (302) in the same window (304) as the departure date (302) in response to the selection of the edit icon (301) associated with the initial departure date (302).

While the example of Fig. 3 depicts the slider edit tool (300) below the departure date (302), the slider edit tool (300) may be displayed anywhere in the window (304) including above the initial departure date (302) or to the side of the initial departure date (302). In some examples, the slider edit tool (300) may replace the initial departure date (302). In the illustrated example, the slider edit tool appears between the initial departure date (302) and the initial return date (306). In some examples, the initial return date (306) may be moved downward, to the side, or otherwise moved to make room for the slider edit tool (300). However, in other examples, the initial return date remains in its original position and the slider edit tool (300) may be displayed elsewhere in the window (304). In some examples, the window has a space dedicated to displaying the slider edit tool for both the departure date (302) and the return date (306) within the window (304). In other examples, the slider edit tool (300) is continually displayed within the window. To optimize space usage, the edit slider tool may use the same position as the initial date while in edition mode.

In Fig. 3, the slider edit tool (300) has a first section icon (308) associated with a first editable section (310), a second section icon (312) associated with a second editable section (314), and a third section icon (316) associated with a third editable section (318). In the illustrated example, the first editable section (310) is a day editable section, the second editable section (314) is a month editable section, and the third editable section (318) is a year editable section. Each editable section (310, 314, 318) has its own slider positioned between range end points of a range corresponding to the information of the editable section. In response to selecting a section icon, the editable section's slider and range appear. If a different range and slider of a different editable section are displayed prior to the selection of the section icon, the different slider and range may disappear in response to the selection of the section icon. In some examples, the section icon of the editable section that is collapsing moves to the side to make room for the expanding editable section.

In the example of Fig. 3, the first editable section (310) is expanded and is displaying a first range (320). The first range (320) has a first range end point (322) at a first day of a month and a second range end point (324) at a last day of the month. In some examples, the range (320) includes thirty one days regardless of which month is selected in the second editable section (314), which is a month editable section. In other examples, the range end points (322, 324) of the first editable section (310) change to reflect the appropriate number of days within the month selected in the second editable section (314).

Fig. 4 is a diagram of an illustrative slider edit tool (400), according to principles described herein. In this example, a touch input (402) make contact with the slider (404) of the first editable section (406) and slides the slider (404) from a first position in the first range (408) that represents a value of 25 to a second position that represents a value of 18. As a consequence, the user changed the day in the first editable section (406) from the 25^{th} day of the month to the 18^{th} day of the month.

Fig. 5 is a diagram of an illustrative slider edit tool (500), according to principles described herein. In this example, the second editable section (502) is expanded in response to the selection of the second section icon (504). In this illustrated example, the touch input (506) is moving the second slider (508) along the second range (510) which has values representing the number of months in a year. In this example, the touch input has moved the slider (508) to the position in the second range (510) that represents the first month of the year. The first slider and first range that were depicted in Fig. 4 have disappeared in response to the selection of the second section icon to make room for the second slider (508) and corresponding second range (510). As the first slider and first range disappear and the second slider (508) and corresponding second range (510) appear, the slider edit tool (500) may remain the same size. This collapsing and expanding of editable sections may conserve space in the application window, and thereby allow the edits to be made in without having to use a separate window or having to rearrange the webpage layout to accommodate the edits.

Fig. 6 is a diagram of an illustrative slider edit tool (600), according to principles described herein. In this example, the third editable section (602) is expanded in response to the selection of the third section icon (604). In this illustrated example, the touch input (606) is moving the third slider (608) along the third range (610) which has values representing a predefined number of years. In this example, the touch input has moved the slider (608) to the position in the third range (610) that represents the year 2013.

In some examples, the third range is a dynamic range that changes depending on the current date. For example, if the year is 2012, the first range end point of the third range may be the year 2012. Further, the second range end point may be determined by adding a predetermined value to the first range end point. For example, if the first range end point represents the year 2012 and the predetermined value is twelve, then the second range end point may be 2020. In some examples, the second range end point is fixed at reasonable value.

If a user successfully modifies the values of the ranges in the editable sections, the user may select a confirmation icon (612). In response to the selection of the confirmation icon (612), the slider edit tool (600) may collapse, and the initial departure date (614) may be changed to reflect the changes made by the user with the slider edit tool. However, if the user desires to cancel the changes made to the editable sections, the user may select a cancelation icon (616). In response to selecting the cancelation icon (616), the slider edit tool (600) may disappear from the window (618) and the initial departure date (614) may remain unchanged.

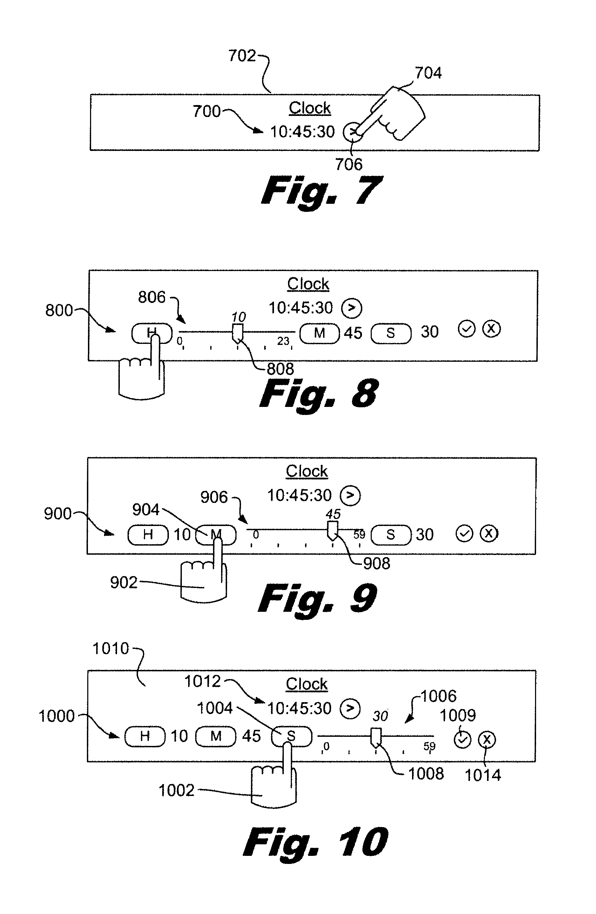

Fig. 7 is a diagram of illustrative information (700), according to principles described herein. In this example, the information (700) displayed in a clock window (702) of a computer program or application. Further, in the illustrated example, a touch input (704) is selecting an edit icon (706). In response to selecting the edit icon (706), a slider edit tool may appear within the clock window.

Fig. 8 is a diagram of an illustrative slider edit tool (800), according to principles described herein. In this example, the touch input (802) is selecting a first section icon (804) of a first editable section (806) that is an hour editable section. As a consequence, the user may modify the hour value of the clock window by sliding the slider (808) in the first editable section (806) to the appropriate hour value. In Fig. 8, the range is between one and twenty three hours.

Fig. 9 is a diagram of an illustrative slider edit tool (900), according to principles described herein. In this example, the touch input (902) is selecting a first section icon (904) of a first editable section (906) that is a minute editable section. As a consequence, the user may modify the minute value of the clock by sliding the slider (908) in the second editable section (906) to the appropriate minute value. In Fig. 9, the range is between one and fifty nine minutes.

Fig. 10 is a diagram of an illustrative slider edit tool (1000), according to principles described herein. In this example, the touch input (1002) is selecting a third section icon (1004) of a third editable section (1006) that is a second editable section. As a consequence, the user may modify the second value of the clock by sliding the slider (1008) in the third editable section (1006) to the appropriate second value. In Fig. 10, the range is between one and fifty nine seconds.

The user may select the confirmation icon (1009) when the user is satisfied with the changes to the clock window (1010) to change the information (1012). However, the user has an option to select the cancelation icon (1014) to cancel the changes made and to cause the slider edit tool (1000) to disappear.

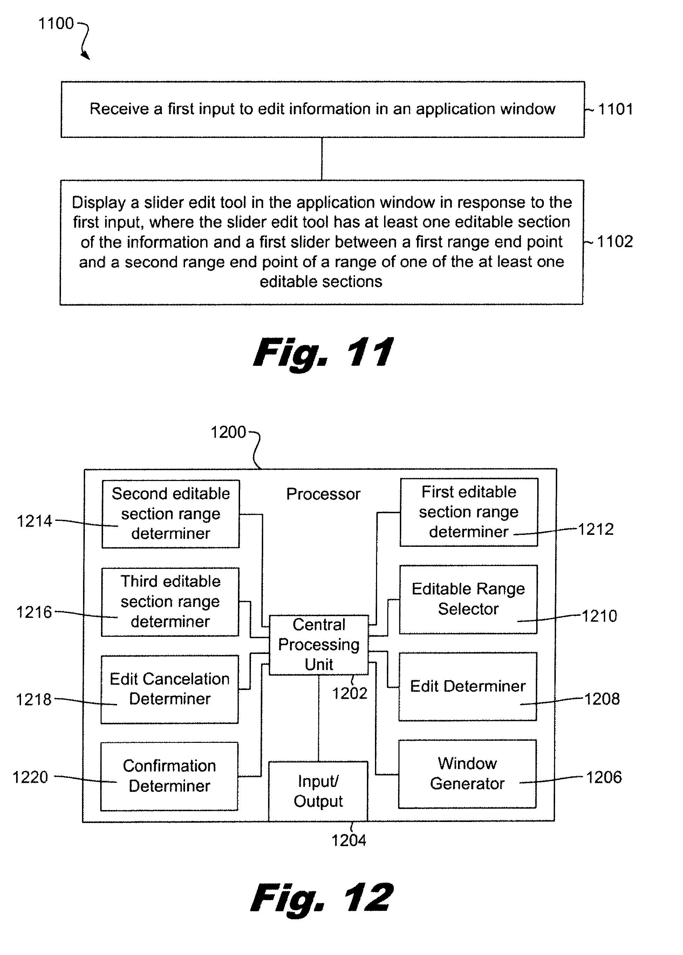

Fig. 11 is a diagram of an illustrative method (1100) for editing information, according to principles described herein. In this example, the method (1100) includes receiving (1101) a first input to edit information in an application window and displaying (1102) a slider edit tool in the application window in response to the first input where the slider edit tool has at least one editable section of the information and a first slider between a first range end point and a second range end point of a range of one of the at least one editable sections.

In some examples, the method includes changing information in response to receiving a second input from movement of the first slider. Further, the method may also include discontinuing the slider edit tool in response to a third input to confirm that the time information is correct. The method may also include discontinuing the slider edit tool in response to selecting a cancelation icon. In response to a cancelation command, the information may remain unchanged.

The method may include displaying a second slider that corresponds to another of the editable sections in response to a forth input. In such an example, the first slider and its associated range may disappear to make room for the second slider.

In some examples, the editable sections includes a time editable section, an hour editable section, a minute editable section, a second editable section, a date editable section, a year editable section, a month editable section, a day editable section, a percentage editable section, other editable sections, or combinations thereof. In some examples, the editable sections affect the ranges in the other editable sections. For example, if the first editable section is a month editable section and the month selected is February, a second editable section in the slider edit tool that contains a range of days of a month may be limited to twenty eight day. In such an example, the range of the second editable section may increase to thirty one days if the slider of the first editable section has been moved to a position representing a month that has thirty one days.

In some examples, the application window is a mobile application. The slider edit tool may be well suited for touch screens on mobile devices because touch inputs may easily move the slider tool between the ranges' end points. Further, the slider edit tool may also be well suited for mobile applications because the slider edit tool appears within the same window as the information that is to be edited. Such convenience may save the user time by freeing up the user's resources that would otherwise be spent on navigating between windows to make the changes. Further additional time may be saved since a new window does not need to be generated. Further, another advantage of the principles described herein is that the slider edit tool is intuitive to use.

Fig. 12 is a diagram of an illustrative processor (1200), according to principles described herein. In this example, the processor (1200) has a central processing unit (CPU) (1202) in communication with an input/output (1204). The processor (1200) may be located in a server with a connection to a client device, or the processor may be in the client device itself. In some examples, the input/output (1204) is in communication with a user interface and a display screen for displaying the information and slider edit tool.

In the example of Fig. 12, the processor (1200) has a window generator (1206) that is capable of generating the window with which the information is displayed. The window may be an application window, a mobile application window, a clock window, a date selection window, another window, or combinations thereof.

An edit determiner (1208) may determine when a user has selected an edit icon to edit the information in the window. In response to determining that the edit icon is selected, the processor (1200) may cause a slider edit tool to appear in the window.

Further, the processor (1200) may have an editable range selector (1210) that may identify when the user has selected an editable range to edit. For example, if the slider edit tool has three editable ranges, the editable range selector (1210) may determine which of the three ranges that the user intends to edit. For example, the editable range selector may determine which range to use in response to the user's selection of an editable section icon. In response to the selection of the section icon, the processor (1200) may cause a range and a slider of the editable section to appear within the window.

The processor (1200) may have a first editable section range determiner (1212), a second editable range determiner (1214), and a third editable range determiner (1216). These range determiners (1212, 1214, 1216) may be used in their respective editable section and may determine the value of that section. The range determiners (1212, 1214, 1216) may determine the selected value of each range by determining the position of the slider between the range's end points.

In other examples, the processor may have a different number of editable range determiners. For example, in addition to a day editable range, a month editable range, and a year editable range, the processor may also include a duration editable range. The duration editable range may include a time duration in days, weeks, months, years, another time duration, or combinations thereof. The day, month, and year editable ranges may allow a user to specify the starting time of a duration and the duration editable range may allow the use to specify how long the duration will last. In other example, the duration editable range may include options to specify a duration with hours, minutes, second, other time units, or combinations thereof. In one example, such a duration editable range may be used with an hour editable range, a minute editable range, a second editable range, or combinations thereof.

Further, the processor (1200) may include an edit cancellation determiner (1218) that determines if the user has canceled the edits to the editable sections. In response to canceling the edits, the information may remain unchanged in the window and the slider edit tool may disappear. The edit cancelation determiner (1218) may determine that the edits are canceled in response to the selection of a cancelation icon in the window.

Also, the processor (1200) may include a confirmation determiner (1220) that may determine if the user has confirmed the edits. If the user has confirmed the edits, the confirmation determiner (1220) may change the information in the window and cause the slider edit tool to disappear.

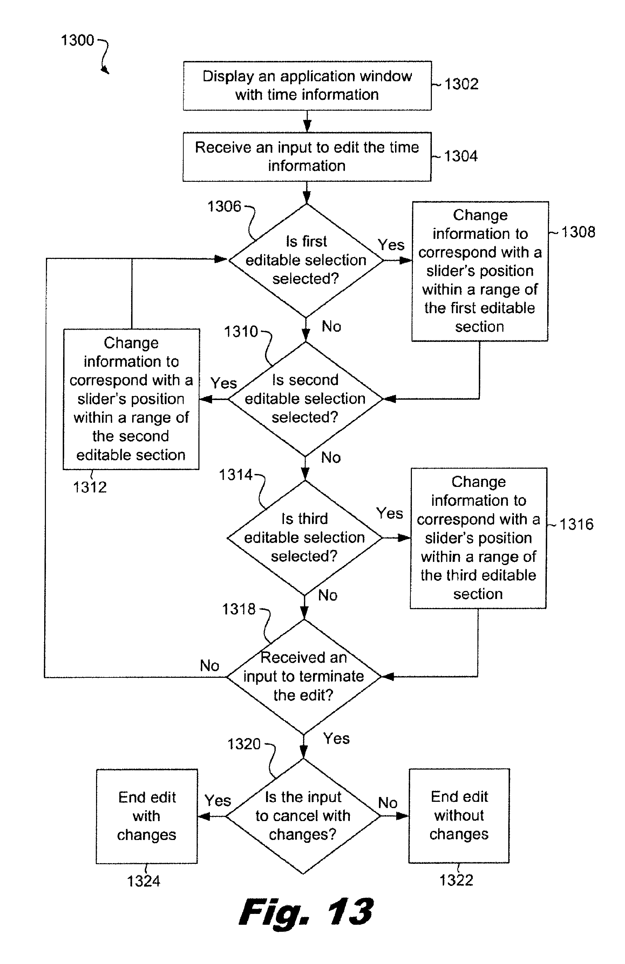

Fig. 13 is a diagram of an illustrative flowchart (1300) of a process for editing information, according to principles described herein. In this example, the process includes displaying (1302) an application window with time information and receiving (1304) an input to edit the time information. In response to the input, a slider edit tool with multiple editable sections may open in the window.

The process may determine (1306) whether the first editable section is selected for editing. If the first editable section is selected, the process may include changing (1308) the information to correspond with the slider position within a range of the first editable section. In response to making the changes, the process may include determining (1310) whether the second editable section is selected for editing.

If the process determines that the first editable section was not selected, the process may include determining (1310) whether the second editable section was selected. If the second editable section is selected, the process may include changing (1312) the information to correspond with the slider position within a range of the second editable section. In response to making the changes, the process may include determining (1306) whether the first editable section is selected for editing.

If the process determines that the second editable section was not selected, the process may include determining (1314) whether the third editable section was selected. If the third editable section is selected, the process may include changing (1316) the information to correspond with the slider position within a range of the third editable section. In response to making the changes, the process may include determining (1318) whether a processer running the process received an input to terminate the edit.

If none of the editable sections are selected, the process may include determining (1318) whether a processer running the process received (1320) an input to terminate the edit. If there has been no receipt of an instruction to terminate the edit, the process may include determining whether first editable section has been selected for editing (1306) and repeat the process.

If there has been a receipt of input to terminate the edit, the process may include determining (1320) whether the input is a cancelation input. If the input is a cancelation input, then the process may include ending (1322) the edit without making changes to the information in the application window. If the input is not a cancelation input, then the process may assume that the input is a confirmation input. If the input is assumed to be a confirmation input, then the process may end (1324) the edit by causing the slider edit tool to disappear and to change the information in the application as instructed by the user through the slider edit tool.

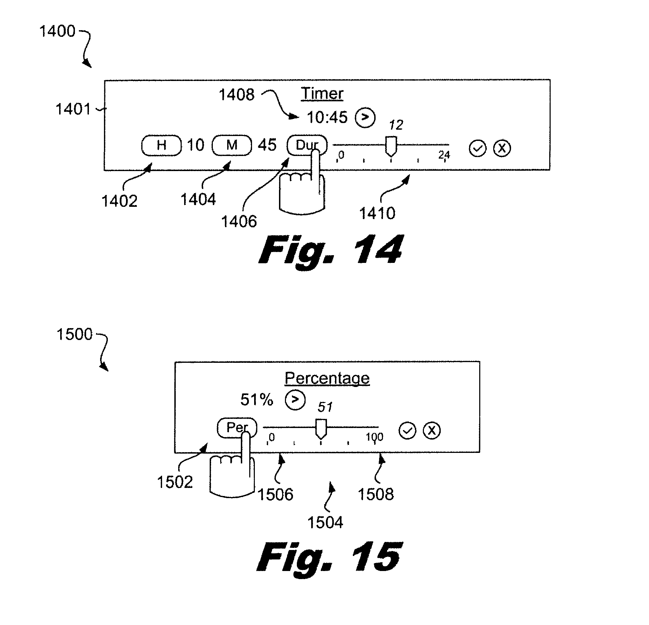

Fig. 14 is a diagram of an illustrative slider edit tool (1400), according to principles described herein. In this example, the slider edit tool (1400) is associated with a timer (1401) has an hour editable section (1402), a minute editable section (1404), and a duration editable section (1406). In the illustrated examples, the hour editable section (1402) and the minute editable section (1404) may allow the user to specify a starting time (1408). Further, the duration editable section may allow the user to specify how long a duration starting at the starting time (1408) should last. In this example, the range (1410) is in units of hours. However, in other examples, the range (1410) may use any time unit, such as minutes, seconds, days, weeks, months, years, other time units, or combinations therein.

In some examples, the duration editable section (1406) is associated with the hour editable section (1402) and the minute editable section (1404) because the duration's starting time is dependent on the values selected from the hour and minute editable sections (1402, 1404). In other examples, other types of editable sections that are associated with other editable sections in the window may be used. For example, an associated editable section may allow a user to specify whether information in the other editable sections should be used once a week, once a month, other frequency, or combinations thereof. In other examples, the associated editable section may allow the user to specify whether the information in the other editable sections should be used part time or full time.

Fig. 15 is a diagram of an illustrative slider edit tool (1500), according to principles described herein. In this example, the slider edit tool (1500) has a single editable section (1502) that has a percentage range (1504) spanning from a first range end point (1506) of zero percent to a second range end point (1508) of a hundred percent.

While above examples have been described with time information, date information, and combinations thereof, the slider edit tool may be used to edit any kind of information. Such information may be divided into at least one editable section that has a range with a definite first range end point and definite second range end point. Other information that may be suitable for such range criteria may include percentages, dates, times, other information, and combinations thereof. In some examples, the slider edit tool is used to modify durations. For examples, the slider edit tool may be used to select a starting or ending point and the slider edit tool may have an editable range that allows the user to select how long the duration may be within the range provided by the editable section.

Further, while the above examples have been depicted with specific numbers of editable sections within the slider edit tool, any number of editable sections may be used. Also, slider edit tools that are used to modify time may have any number of editable slider sections. For example, a slider edit tool may have just an hour editable section, just a minute editable section, or just a second editable section. In some examples, the time editable section includes a range that has value with quarter hour increments, and the entire information in the window may be modified with such a single editable section. In some examples, an hour editable section has a twelve hour range, a twenty four hour range, or combinations thereof. In some examples, the slider edit tool includes an am/pm editable section.

While the examples described above have been depicted with specific layouts, any layout compatible with the principles described herein may be used. For example, the slider edit tool may be arranged horizontally, vertically, diagonally, arranged in another manner, or combinations thereof. In some applications, the slider edit tool has a layout that is arranged to accommodate a shape of an open space in the window.

Further, while the above examples have been depicted with one date or one time information to edit, any type of editable information may be used. For example, a slider edit tool may have a date (day, month, year) and time (hour, minutes) field to edit if the application requires such level of information. In other examples, the slider edit tool has an editable day section with a duration in days or weeks.

The preceding description has been presented only to illustrate and describe examples of the principles described. This description is not intended to be exhaustive or to limit these principles to any precise form disclosed. Many modifications and variations are possible in light of the above teaching.

## Claims

1. A method for editing information with slider edit tools, comprising:
receiving a first input to edit information in an application window; and
displaying a slider edit tool in said application window in response to said first input, where said slider edit tool comprises at least one editable section of said information and a first slider between a first range end point and a second range end point of a range of one of said at least one editable section.

2. The method of claim 1, wherein said at least one editable section includes a time editable section, an hour editable section, a minute editable section, a second editable section, or combinations thereof.

3. The method of claim 1, wherein said at least one editable section includes a date editable section, a year editable section, a month editable section, a day editable section, or combinations thereof.

4. The method of claim 1, wherein said application window is a mobile application window.

5. The method of claim 1, further comprising changing said information in response to receiving a second input from movement of said first slider.

6. The method of claim 1, further comprising discontinuing said slider edit tool in response to a third input to confirm that said information is correct.

7. The method of claim 1, further comprising displaying a second slider corresponding to another of said at least one editable section in response to a forth input.

8. The method of claim 7, further comprising discontinuing to display said first slider in response to said fourth input.

9. The method of claim 1, wherein said at least one editable section includes a duration editable section, a percentage editable section, an editable section associated with another editable section, or combinations thereof.

10. A system for editing information with slider edit tools, comprising:
a processor programmed to
display an application window with time information;
receive an input to edit said time information;
display a slider edit tool in said application window in response to said input, where said slider edit tool comprises multiple edit icons that correspond to editable sections of said time information and a first slider between a first range end point and a second range end point of a range of one of said editable sections.

11. The system of claim 10, wherein said editable sections includes a time editable section, an hour editable section, a minute editable section, a second editable section, or combinations thereof.

12. The system of claim 10, wherein said editable sections includes a date editable section, a year editable section, a month editable section, a day editable section, or combinations thereof.

13. A computer program product, comprising:
a computer readable storage medium, said computer readable storage medium comprising computer readable program code embodied therewith, said computer readable program code comprising:
computer readable program code to receive a first input to edit time information in an application window;
computer readable program code to display a slider edit tool in said application window in response to said first input, where said slider edit tool comprises multiple edit icons that correspond to editable sections of said time information and a first slider between a first range end point and a second range end point of a range of one of said editable sections; and
computer readable program code to change time information in response to receiving a second input from movement of said first slider.

14. The computer program product of claim 13, further comprising computer readable program code to display a second slider corresponding to third input.

15. The computer program product of claim 14, further comprising computer readable program code to discontinue displaying said first slider in response to said third input.
